# EUROPEAN PATENT APPLICATION

(11) **EP 3 517 833 A1**
(43) Date of publication of application: **31.07.2019**
(21) Application number: 18382048.9
(22) Date of filing: 29.01.2018
(51) Int. Cl.: F21S 45/00, B60Q 1/00, B60R 16/02, H02G 3/00, H02G 3/38, B29C 53/02

(54) **AUTOMOTIVE PART, METHOD AND APPARATUS FOR MANUFACTURING AN AUTOMOTIVE LIGHTING DEVICE AND AUTOMOTIVE LIGHTING DEVICE**

(71) Applicant: Valeo Iluminacion, 23600 Martos (ES)
(72) Inventor: TEBA, Daniel, 23600 MARTOS (ES); GUZMAN, Alfonso-Manuel, 23600 MARTOS (ES); RAMA, Beatriz, 23600 MARTOS (ES); MARTINEZ, Juan-Carlos, 23600 MARTOS (ES); MEDINA, Manuel-Jesus, 23600 MARTOS (ES); MARTINEZ-REQUENA, Francisco, 23600 MARTOS (ES)

(57) **Abstract**

The invention refers to an automotive part (20) for manufacturing an automotive lighting device housing, the automotive part (20) comprising a first wall (31) and a second wall (32). The first height (h1) of the first wall (31) is greater than the wall distance (wd), the first wall (31) being suitable for being bent over the second wall (32) thus creating a wire retainer.

## Description

### TECHNICAL FIELD

This invention is related to the field of automotive lighting devices.

### STATE OF THE ART

When manufacturing a lighting device, wires harnesses are located uncontrolledly along the inner surface of the housing. Spare portions are loose, so they may be entangled or even cut by other elements. This may happen during the lifetime of the lighting device or even in the manufacturing process.

In known solutions, a harness is gathered by a flange, and then this flange is attached to the inner surface of the housing. This avoids the conductive wires being freely arranged in the interior of the housing, but sometimes is not enough to prevent the conductive wires from being accidentally cut or trapped between two elements, mostly in their manufacturing process.

### DESCRIPTION OF THE INVENTION

The invention provides a solution for this problem by means of an automotive part according to claim 1 a method according to claim 6 and an apparatus according to claim 11. Preferred embodiments of the invention are defined in dependent claims.

In an inventive aspect, the invention provides an automotive part for manufacturing an automotive lighting device housing. This automotive part comprises
a substrate with an inner surface;
a first wall protruding a first height from the inner surface; and
a second wall protruding a second height from the inner surface and located at a wall distance from the first wall, the wall distance being measured following a separation direction given by the two points of the first and second wall which are closest between them; wherein the first wall has a main thickness, which is the thickness of the first wall measured in the separation direction at a distance from the inner surface equal to the second height and;
wherein the first height is greater than the wall distance, the first wall being suitable for being bent over the second wall thus creating a wire retainer.

In the event the first and second walls are not parallel, the wall distance would therefore be the minimum distance between the first wall and the second wall.

This automotive part may be manufactured as a final product, and is suitable for manufacturing an automotive lighting device housing by bending the first wall over the second wall and encompassing some conductive wires inside.

In some particular embodiments, the first height is at least 1.5 times the wall distance and the main thickness is lower than 0.2 times the first height.

These particular ranges make it easier the bending of the first wall over the second wall to create the wire retainer.

In some particular embodiments, the automotive part is made of at least one of polypropylene, acrylonitrile butadiene styrene, poly-carbonate and preferably doped with talc and/or glass.

These materials are very suitable for the manufacture of an automotive lighting housing, and to undergo the steps of a manufacturing method according to the invention.

In some particular embodiments, the first wall is parallel to the second wall and the distance between them is comprised between 2 and 8 cm.

The parallel arrangement optimizes the space between the walls, so that the conductive wires may run between them. This distance is fairly enough for the conductive wires used in the majority of automotive lighting devices.

In some particular embodiments, the first height is comprised between 3 and 20 cm. This height is also usually enough for providing a spare portion in the first wall to be bended over the second wall.

In some particular embodiments, the first wall has an upper portion with a thickness lower than the main thickness, the upper portion being further from the inner surface than the point where the main thickness is measured.

This decreasing thickness saves material and weight without compromising reliability.

In a further inventive aspect, the invention provides a method for manufacturing an automotive lighting device housing, the method comprising the steps of
providing an automotive part according to any of the preceding claims, wherein the substrate is a lighting device housing;
providing a plurality of conductive wires located between first wall and the second wall;
heating at least a heating portion of the first wall and bending the first wall over the second wall, so that the plurality of conductive wires are surrounded by the first and second walls and a portion of the inner surface of the housing.

This method is suitable for manufacturing an automotive lighting device housing which has conductive wires in contact with the housing and reducing the risk of entangling.

In some particular embodiments, the step of heating at least a portion of the first wall is performed by means of a wire which is put at a distance between 1 and 25 mm from the heating portion.

A hot wire is used to heat the heating portion of the first wall. This distance is enough to cause this heating effect without damaging this part.

In some particular embodiments, the step of bending the first wall over the second wall is performed until the first wall makes contact with the second wall.

This contact is one of the possibilities to ensure a correct closure of the space between the first and the second wall.

In some particular embodiments, the step of bending the first wall over the second wall is performed following a line parallel to the housing.

These embodiments are very suitable for those automotive lighting housings where the first wall has an edge free to rotate.

In some particular embodiments, the step of bending the first wall over the second wall is performed following a line which is not parallel to the housing.

These embodiments are very suitable for those automotive lighting housings where the edge of the first wall to be rotated is not completely free to rotate.

In a further inventive aspect, the invention provides an apparatus for performing the steps of a method according to the preceding inventive aspect, the apparatus comprising
a heating element; and
a bending element rotatable around a hinge.

In some particular embodiments, the apparatus further comprises a wire retainer suitable for limiting the position of a plurality of wires while the bending element is rotated around the hinge.

In a further inventive aspect, the invention provides an automotive lighting device comprising an automotive lighting device housing manufactured by a method according to the invention.

This automotive lighting device has conductive wires in contact with the housing and reduces the risk of entangling. Hence, this automotive lighting device is more reliable and robust.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1a to 1d shows some steps of a method for manufacturing an automotive lighting device according to the invention.
Figures 2a and 2b shows some steps of an alternative method for manufacturing an automotive lighting device according to the invention.
Figure 3 shows an automotive lighting device comprising an automotive lighting device housing manufactured by a method according to the invention.

### DETAILED DESCRIPTION OF THE INVENTION

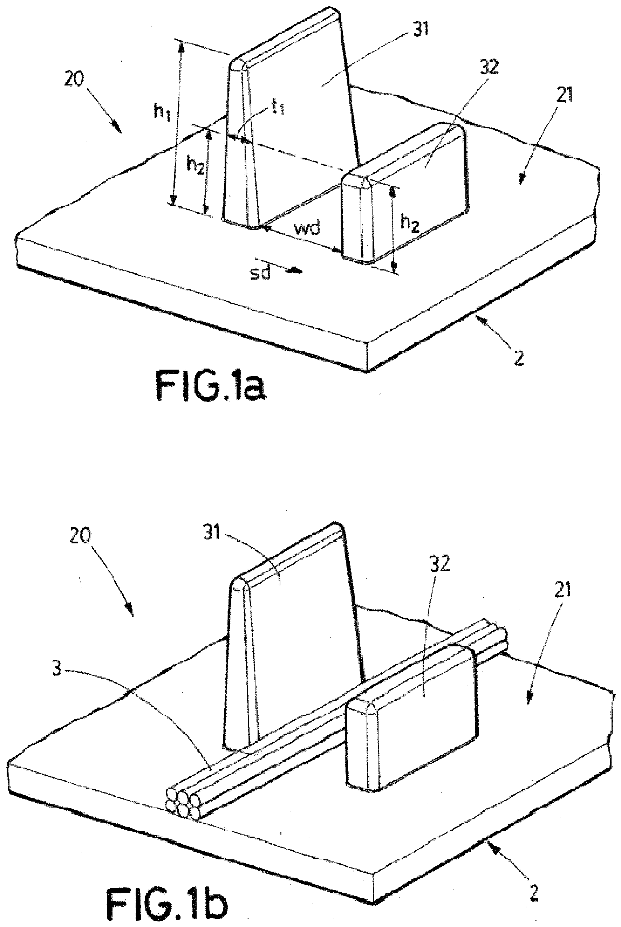

Figures 1a to 1d shows some steps of a method for manufacturing an automotive lighting device according to the invention.

Figure 1a shows a first step of this method.

In this first step, an automotive part 20 is provided. This automotive part 20 is made of acrylonitrile butadiene styrene and comprises
a housing 2 with an inner surface 21;
a first wall 31; and
a second wall 32.

The first wall 31 protrudes a first height h1 from the inner surface 21 and has a main thickness t1. The second wall 32 in turn protrudes a second height h2 from the inner surface 21. The main thickness t1 is measured in the separation direction sd at a distance from the inner surface equal to the second height h2. This means that the main thickness t1 is not measured in the portion of the first wall 31 which is at the inner surface 21, and is not measured in the portion of the first wall 31 which is farthest from the inner surface 21, but approximately half way: in a point which is a distance from the inner surface equal to the second height h2. Further, this main thickness t1 is measured in the separation direction sd, which is given by the two points of the first and second wall which are closest between them. In the event these first and second walls are parallel, the separation direction is the direction perpendicular to both of them.

However, the thickness of the first wall 31 may not be constant, and is not constant in this embodiment. The first wall 31 has an upper portion with a thickness lower than the main thickness t1. This upper portion being further from the inner surface 21 than the point where the main thickness t1 is measured. Hence, the thickness of the first wall 31 diminishes with the distance from the inner surface 21.

This second wall 32 is located at a wall distance wd from the first wall 31. The wall distance wd is measured in the separation direction sd: in the event the first and second walls are parallel, this wall distance wd is the distance between the parallel walls.

The first height h1 is in this embodiment twice the wall distance wd and the main thickness t1 is 0.05 times the wall distance wd. Hence, the first wall 31 being therefore suitable for being bent over the second wall 32. In this embodiment, the first wall 31 is parallel to the second wall 32 and the distance between them is 5 cm. The first height h1 is therefore 10 cm.

Figure 1b shows a second step of this method. In this step, a plurality of conductive wires 3 is provided between first wall 31 and the second wall 32. These conductive wires 3 are intended to provide electrical supply and signals to a lighting module contained in the automotive lighting device.

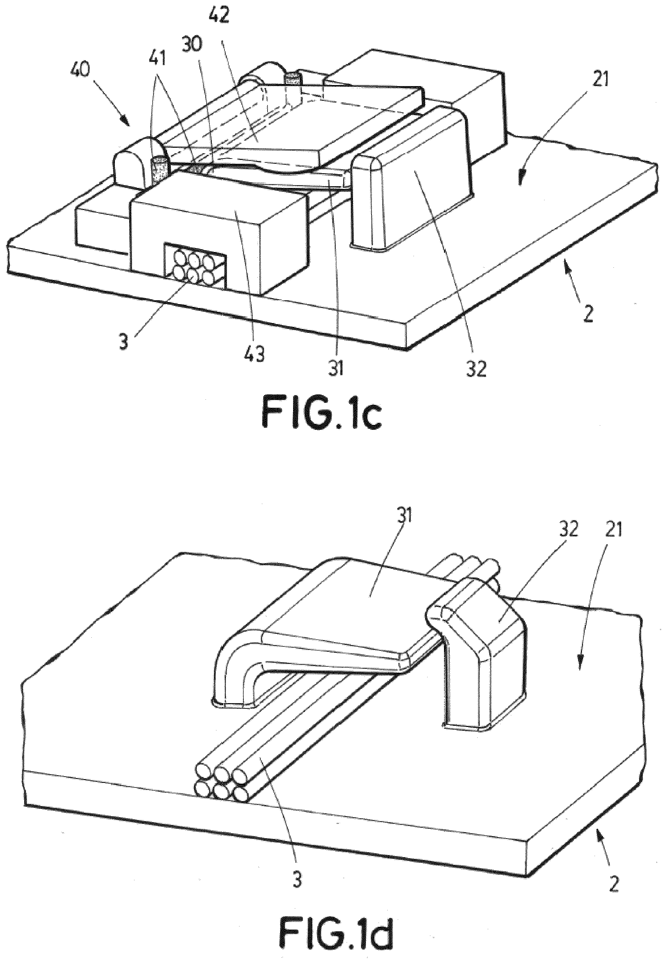

Figure 1c shows a third step of this method. For this second step, an apparatus 40 suitable for carrying out this step is provided. This apparatus 40 comprises a heating element 41, a bending element 42 rotatable around a hinge and a wire retainer 43.

The heating element 41 is located near a heating portion 30 of the first wall 31 and the bending element 42 is located near the first wall 31. In these embodiments, the heating element 41 is located at a suitable distance of the heating portion 30, preferably 10 mm, not to damage it.

This step includes heating the heating portion 30 of the first wall 31 with the heating element 41 and then bending the first wall 31 over the second wall 32 by rotating the bending element 42 around the hinge over the upper portion of the first wall 31, so that the plurality of conductive wires 3 are surrounded by the first 31 and second 32 walls and a portion of the inner surface 21 of the housing 2.

While the bending element 42 is rotated, the wire retainer 43 ensures the correct position of the conductive wires 3 during all the process.

In this case, the first wall 31 is bent over the second wall 32 until the first wall 31 makes contact with the second wall 32. However, in other embodiments there are other ways of ensuring the correct closure of this region, such as a small bending in the second wall, which makes this contact unnecessary.

Figure 1d shows the lighting device housing which results from these steps. The conductive wires 3 are enclosed by the first wall 31, the second wall 32 and a portion of the inner surface 21 of the housing 2. As a consequence, they are perfectly limited, thus reducing the risk of cutting, trapping or entangling.

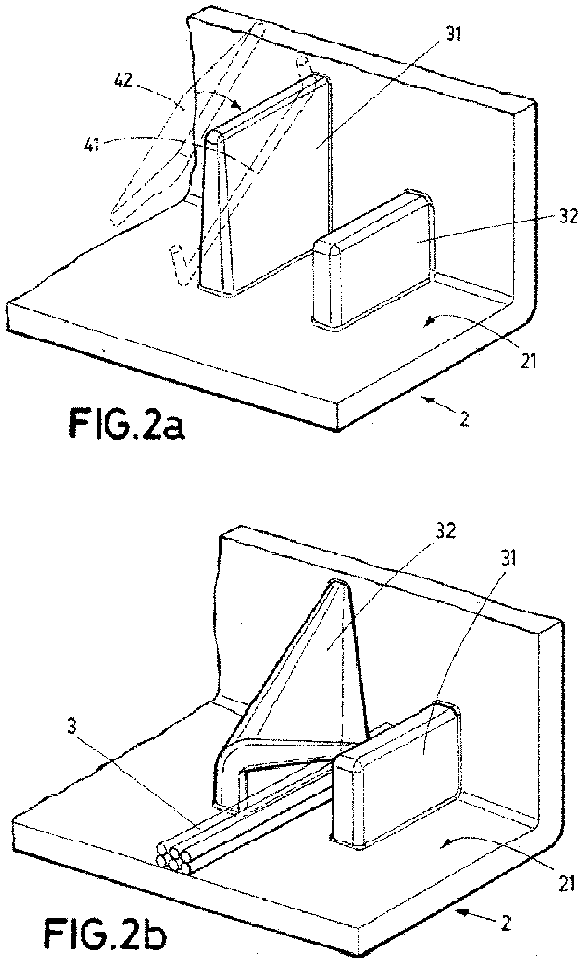

Figure 2a shows an alternative scenario for this third step. In this case, the first 31 and the second 32 walls are also limited by a vertical wall of the housing 2. In this case, it is not possible to bend the first wall 31 following a line which is parallel to the housing 2.

As a consequence, the heating element 41 and the bending element 42 are arranged following a diagonal line, so that a substantially triangular portion of the first wall 31 is bent over the second wall 32.

Figure 2b shows the lighting device housing which results from these steps. The conductive wires 3 are enclosed by the first wall 31, the second wall 32 and a portion of the inner surface 21 of the housing 2, although in a different way from the housing of Figure 1d. However, they are also perfectly limited, thus reducing the risk of cutting, trapping or entangling.

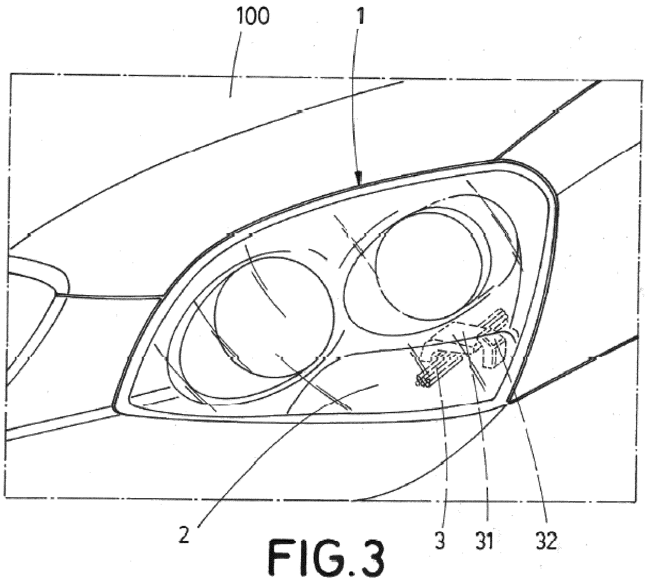

Figure 3 shows an automotive vehicle 100 with an automotive lighting device 1 comprising an automotive lighting device housing 2 manufactured by a method according to the invention.

## Claims

1. Automotive part (20) for manufacturing an automotive lighting device housing, the automotive part (20) comprising
a substrate with an inner surface (21);
a first wall (31) protruding a first height (h1) from the inner surface (21); and
a second wall (32) protruding a second height (h2) from the inner surface (21) and located at a wall distance (wd) from the first wall (31), the wall distance (wd) being measured following a separation direction (sd) given by the two points of the first and second wall which are closest between them;
wherein the first wall (31) has a main thickness (t1), which is the thickness of the first wall measured in the separation direction (sd) at a distance from the inner surface (21) equal to the second height (h2) and;
wherein the first height (h1) is greater than the wall distance (wd), the first wall (31) being suitable for being bent over the second wall (32) thus creating a wire retainer.

2. Automotive part (20) according to claim 1, wherein the first height (h1) is at least 1.5 times the wall distance (wd) and the main thickness (t1) is lower than 0.2 times the first height (h1).

3. Automotive part (20) according to any of claims 1 or 2, being made of at least one of polypropylene, acrylonitrile butadiene styrene, poly-carbonate and preferably doped with talc and/or glass.

4. Automotive part (20) according to any of the preceding claims, wherein the first wall (31) is parallel to the second wall (32) and the wall distance (wd) is comprised between 2 and 8 cm.

5. Automotive part (20) according to any of the preceding claims, wherein the first height (h1) is comprised between 3 and 20 cm.

6. Automotive part (20) according to any of the preceding claims, wherein the first wall (31) has an upper portion with a thickness lower than the main thickness (t1), the upper portion being further from the inner surface (21) than the point where the main thickness (t1) is measured.

7. Method for manufacturing an automotive lighting device housing (2), the method comprising the steps of
providing an automotive part (20) according to any of the preceding claims, wherein the substrate is a lighting device housing (2);
providing a plurality of conductive wires (3) located between first wall (31) and the second wall (32);
heating at least a heating portion (30) of the first wall (31) and bending the first wall (31) over the second wall (32), so that the plurality of conductive wires (3) are surrounded by the first (31) and second (32) walls and a portion of the inner surface (21) of the housing (2).

8. Method according to claim 7, wherein the step of heating at least a portion of the first wall is performed by means of a wire which is put at a distance between 1 and 25 mm from the heating portion (30).

9. Method according to any of the claims 7 or 8, wherein the step of bending the first wall (31) over the second wall (32) is performed until the first wall (31) makes contact with the second wall (32).

10. Method according to any of claims 7 to 9, wherein the step of bending the first wall (31) over the second wall (32) is performed following a line parallel to the housing.

11. Method according to any of claims 7 to 9, wherein the step of bending the first wall (31) over the second wall (32) is performed following a line which is not parallel to the housing.

12. Apparatus (40) for performing the steps of a method according to any of claims 7 to 11, the apparatus (40) comprising
a heating element (41); and
a bending element (42) rotatable around a hinge.

13. Apparatus according to claim 12, further comprising a wire retainer (43) suitable for limiting the position of a plurality of wires while the bending element (42) is rotated around the hinge.

14. Automotive lighting device (1) comprising an automotive lighting device housing (2) manufactured by a method according to any of claims 7 to 11.
